# EUROPEAN PATENT SPECIFICATION

(11) **EP 0 251 639 B1**
(45) Date of publication and mention of the grant of the patent: **03.03.1993**
(21) Application number: 87305552.9
(22) Date of filing: 23.06.1987
(51) Int. Cl.: G02F 1/137, C09K 19/20

(54) **Liquid crystal cell**
Flüssigkristallzelle
Cellule à cristal liquide

(30) Priority: 02.07.1986 GB 8616165
(43) Date of publication of application: 07.01.1988
(73) Proprietor: NORTHERN TELECOM LIMITED, Montreal, Quebec H2Y 3Y4 (CA)
(72) Inventor: Davey, Anthony Bernard, Bishop's Stortford Hertfordshire (GB); Bone, Matthew Francis, Bishop's Stortford Hertfordshire (GB)
(74) Representative: Laurence, Simon French

(56) References cited:
- EP-A- 0 008 816
- DE-A- 3 614 113
- GB-A- 2 166 256
- PHYSICAL REVIEW A, vol. 28, no. 1, July 1983, P.E. CLADIS et al.: "Soliton switch in chiral smetic liquid crystals", pp 512-514
- JAPANESE JOURNAL OF APPLIED PHYSICS, vol. 23, no. 6, June 1984, K. YOSHINO et al.: "New Electro-Optic Effect of Microsecond Response Utilizing Transient Light Scattering in Ferroelectric Liquid Crystal", pp L385-L387
- N.A. Clark and S.T. Lagerwall Appl. Phys. Lett. 36, 899-901

## Description

This invention relates to liquid crystal cells, and in particular to cells with ferroelectric liquid crystal fillings.

Liquid crystals have been employed in a number of different modes for producing display effects. These modes may be divided into two classes; field effect modes, and modes involving electrohydrodynamic instability. Electrohydrodynamic instability in a nematic liquid crystal produces a scattering texture, and is essentially volatile insofar as the instability ceases when the electrical drive is removed, at which time the nematic liquid crystal layer relaxes back into a non-scattering (transparent) state. Nematic liquid crystals can also be operated in field effect mode, which is similarly volatile, but which has the advantage of much smaller operating currents. Typically the field effect alters the propagation of light through the liquid crystal layer in a manner that requires the use of at least one polariser to produce a visual contrast. In this instance the contrast is not between scattering and transparent, but between optically attenuating (typically black) and transparent. For some applications the use of polarisers is either a disadvantage or cannot be tolerated. An example of a field effect mode which does not require the use of polarisers, and which produces an optically scattering effect is described in United Kingdom Patent Specification No. 1 543 599, but this is also a volatile display. Non-volatile (bistable) display modes are obtainable using smectic liquid crystal materials. A bistable field effect mode is described for instance in GB-A-2 166 256 which employs a ferroelectric smectic I* or F* material. In this mode switching between the two states changes the optical propagation in a manner that requires the use of at least one polariser to produce a visual contrast between heavily attenuating regions and other less-attenuating regions. The bistable mode that is described in United Kingdom patent Specification No. 1 577 199 employs a Smectic A material. This mode involves inducing electrohydrodynamic scattering, and extinguishing it either in a manner that produces relaxation into a non-scattering ordered stable state that is transparent, or in a manner that produces relaxation into a focal-conic state which is optically scattering. A disadvantage of this mode is that it required the use of relatively large drive voltages compared with those required to drive ferroelectric modes.

The present invention is concerned with a scattering mode type liquid crystal cell that, like the mode described in United Kingdom Patent Specification No. 1 543 599, does not rely upon inducing electrodynamic effects to produce scattering, but, unlike the volatile field effect mode of that patent specification, exhibits either true bistability, or a quasi-stable state that has a long relaxation period, and is switchable with smaller voltages than typically required for operation of a Smectic A cell of the type described in United Kingdom Patent Specification No. 1 557 199.

According to the present invention there is provided a liquid crystal cell whose optically active medium is provided by a layer of ferroelectric smectic liquid crystal material sandwiched between the opposed surfaces of two electroded substrates (14, 15) which surfaces have a structure (11,12), that promotes planar alignment of the liquid crystal molecules, said liquid crystal material being electrically switchable between two states that are optically distinct, wherein one of said two states is an optically non-scattering state being stable or quasi-stable with a relaxation period in excess of one second and wherein the other of said two states is also stable, characterized in that, in order to ensure that said other state is an optically scattering state, the liquid crystal material has a natural helical pitch length in the range of about 0.3 µm to 0.5 µm, and the thickness of the liquid crystal layer is in the range of 5 µm to about 12 µm.

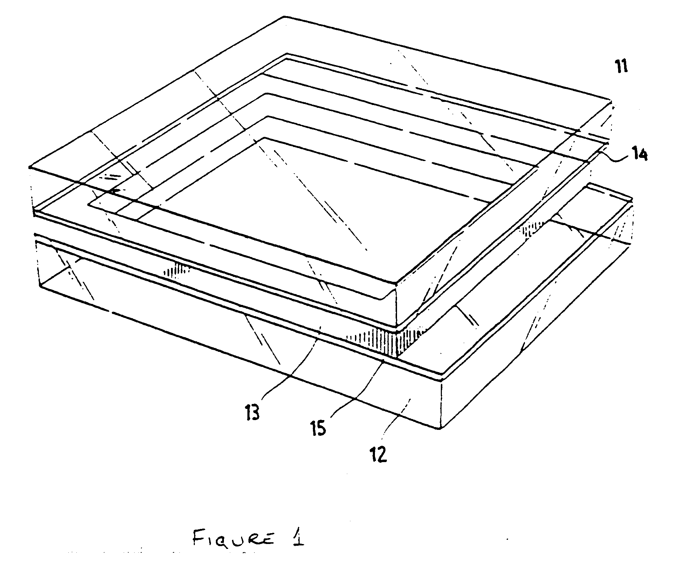

There follows a description of a liquid crystal cell embodying the present invention in a preferred form. The description refers to the accompanying drawing which is a schematic perspective view of the cell.

Referring to the accompanying drawing, a hermetically sealed envelope for a liquid crystal layer is formed by securing together two glass sheets 11 and 12 with a perimeter seal 13. The inward facing surfaces of the two sheets carry transparent electrode layers 14 and 15 of indium tin oxide, and each of these electrode layers is covered within the display area with surface layer (not shown) to induce homogeneous alignment of the liquid crystal molecules in contact with that layer. Preferably the surface layer is such as to promote randomly oriented planar alignment, and may be for instance a dialkoxy silane such as (C₅H₁₁)Si(O(C₂H₅))₂, or an unrubbed polymer layer, for instance of nylon PET (polyethylene terephthalate), or PVA (polyvinyl alcohol).

Planar alignment in a chosen direction can be employed, but generally it is preferred to employ randomly oriented planar alignment because its scattering power is not dependent upon azimuth.

Before applying the planar alignment inducing surface layers, the electrode layers 14 and 15 are patterned as required to produce the requisite display shapes. In the case of a matrix addressed display each electrode layer is patterned to define a set of strip electrodes (not shown) that individually extend across the display area, and on out to beyond the perimeter seal to provide contact areas to which terminal connection can be made.

In the assembled cell the electrode strips of layer 14 extend transversely of those of layer 15 so as to define a pixel at each elemental area where an electrode strip of layer 15 is overlapped by an electrode strip of layer 14. The thickness of the liquid crystal layer contained within the resulting envelope is determined by the thickness of the perimeter seal, and control over the precision of this may be provided by a light scattering of short lengths of glass fibre (not shown) of uniform diameter distributed through the material of the perimeter seal in order to arrest the coming together of the two glass sheets 11 and 12 at a separation of one fibre diameter. Conveniently the cell is filled by applying a vacuum to an aperture (not shown) through one of the glass sheets in one corner of the area enclosed by the perimeter seal so as to cause the liquid crystal medium to enter the cell by way of a second aperture (not shown) in the diagonally opposite corner. The filling operation is carried out with the liquid crystal filling compound heated into its isotropic phase so as to reduce its viscosity to a suitably low value. Subsequent to the filling operation the two apertures are sealed. Typically the thickness of the perimeter seal 13, and hence of the liquid crystal layer is about 5 µm, but thinner or thicker layer thicknesses may be required to suit particular applications.

An example of a suitable ferroelectric liquid crystal filling compound for the cell is provided by the chiral ester S-ethyl 2-(4-nonyloxy-4'-biphenyloyloxy 1''-phenyl-4'' carboxyloxy) propanoate 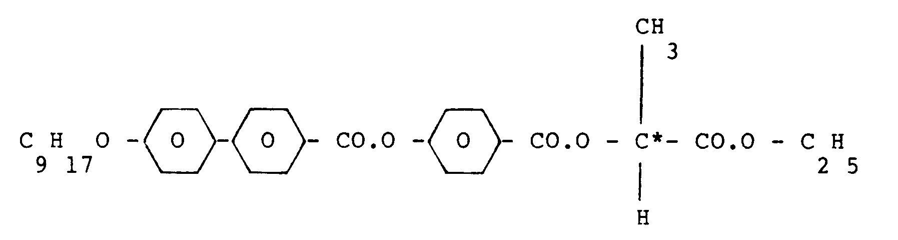
or for instance the octyloxy homologue instead of the nonyloxy one. In the smectic C* phase these materials exhibit a natural helical pitch of about 0.3 to 0.5 µm which is significantly shorter than that of many of the previously reported materials exhibiting a smectic C* phase such as for instance the chiral ester marketed by BDH under the designation CE8, or DOBAMBC which typically have pitch lengths of about 3 µm. It is the short pitch length, being comparable with the wavelength of visible light, that gives rise to the selective reflection of light and thus to the appearance of a light-scattering texture.

After the cell has been filled it is cooled at a relatively rapid rate typically of the order 10°C/min in order to produce a domain structure with domains small compared with 1 mm². This structure is light scattering in the visible wavelength range. (Slower cooling at a rate in the region of only 0.2°C/min produces domains of about 1 mm²in area and in consequence a much impaired scattering texture).

In a series of tests made on a sample cell with a square wave voltage applied to the set of electrode 14, while the other set of electrodes (set of electrodes 15) were maintained at the mid-voltage level of the square wave, it was found that, with a 5 KHz square wave, the first sign of the beginning of the disappearance of the scattering state occurred with a peak to peak voltage of about 14 volts, and that by the time this voltage had increased to about 20 volts the scattering texture had disappeared completely. Corresponding figures for a 2KHz square wave are respectively 6.8 volts and 12 volts, while those for a 1 KHz square wave are 3.2 volts and 6.4 volts.

If the liquid crystal layer is of the appropriate thickness, which typically lies in the range from about 5µm to about 12µm, a pixel will be switched into the clear state by the application of a single pulse, and will remain there substantially indefinitely. In the case of a somewhat thicker cell complete bistability is not observed, and instead the pixel will remain clear for a second or more before relaxation back into the scattering state becomes noticeable. At still greater thicknesses the relaxation becomes faster.

If however the voltage switching the pixel into the clear state is not terminating abruptly, but instead is slowly wound down, as for instance by twisting the knob of a rotary type rheostat, then, as the voltage is reduced, it will at some point revert to the scattering state in the course of the winding down operation.

By way of further example tests were also performed on a three-component mixture comprising : 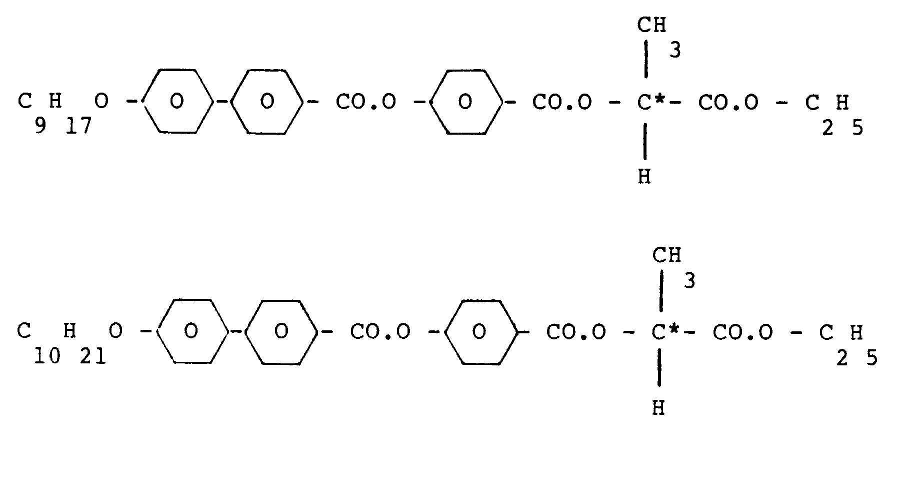
and 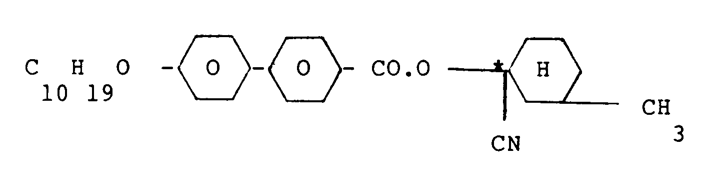
in the weight % proportions 44 : 45 : 11. The mixture is formed of constituents all exhibiting the same handedness, in this case left-handedness, in order to provide the mixture with a short natural pitch length. The proportion of the cyano-compound was smaller than that of the others to avoid solubility problems. The S_{C}-S_{A} transition temperature was 82.6°C and the S_{A}-Isotropic transition temperature was 131°C.

## Claims

1. A liquid crystal cell whose optically active medium is provided by a layer of ferroelectric smectic liquid crystal material sandwiched between the opposed surfaces of two electroded substrates (14, 15) which surfaces have a structure (11,12), that promotes planar alignment of the liquid crystal molecules, said liquid crystal material being electrically switchable between two states that are optically distinct, wherein one of said two states is an optically non-scattering state being stable or quasi-stable with a relaxation period in excess of one second and wherein the other of said two states is also stable characterized in that, in order to ensure that said other state is an optically scattering state, the liquid crystal material has a natural helical pitch length in the range of about 0.3 µm to 0.5 µm, and the thickness of the liquid crystal layer is in the range of 5 µm to about 12 µm.

2. A liquid crystal cell as claimed in claim 1, wherein the surfaces that confine the liquid crystal layer promote randomly oriented planar alignment at its major surfaces.

## Patentansprüche

1. Flüssigkristallzelle, deren optisch aktives Medium durch eine Schicht aus ferroelektischem smektischem Flüssigkristallmaterial gebildet ist, das zwischen den gegenüberliegenden Oberflächen von zwei mit Elektroden versehenen Substraten (14,15) eingeschichtet ist, wobei diese Oberflächen eine eine planare Ausrichtung der Flüssigkristallmoleküle fördernde Struktur (11,12) aufweisen und das Flüssigkristallmaterial elektrisch zwischen zwei Zuständen schaltbar ist, die optisch unterschiedlich sind, worin einer der beiden Zustände ein optisch nicht streuender Zustand ist, der stabil oder quasi-stabil mit einer Relaxationsperiode von mehr als einer Sekunde ist, während der andere der beiden Zustände ebenfalls stabil ist,
dadurch gekennzeichnet, daß, um sicherzustellen, daß der andere Zustand ein optisch streuender Zustand ist, das Flüssigkristallmaterial eine natürliche Schraubenlinien-Steigungslänge im Bereich von ungefähr 0,3 µm bis 0,5 µm aufweist, und daß die Dicke der Flüssigkristallschicht im Bereich von 5 µm bis zu ungefähr 12 µm liegt.

2. Flüssigkristallzelle nach Anspruch 1,
dadurch gekennzeichnet, daß die Oberflächen, die die Flüssigkristallschicht begrenzen, eine zufällig ausgerichtete planare Ausrichtung an ihren Hauptoberflächen fördern.

## Revendications

1. Cellule à cristaux liquides, dont le milieu optiquement actif est fourni par une couche d'une matière smectique ferroélectrique, à propriétés de cristaux liquides, intercalée en sandwich entre les surfaces opposées de deux substrats (14, 15) comportant des électrodes, ces surfaces ayant une structure (11, 12) qui favorise un alignement plan des molécules à propriétés de cristaux liquides, ladite matière à propriétés de cristaux liquides étant électriquement commutable entre deux états qui sont optiquement distincts, l'un de ces dits deux états étant un état de non dispersion ou non diffusion optique, qui est stable ou quasi stable avec une période de relaxation excédant 1 s et l'autre desdits deux états étant également stable, cellule caractérisée en ce que, pour garantir que ledit autre état est bien à un état de diffusion ou dispersion optique, la matière à propriétés de cristaux liquides possède une longueur de pas hélicoïdal naturel comprise entre environ 0,3 µm et 0,5 µm, et l'épaisseur de la couche à propriétés de cristaux liquides se situe entre 5 µm et environ 12 µm.

2. Cellule à cristaux liquides, telle que revendiquée à la revendication 1, dans laquelle les surfaces qui confinent la couche de matière à propriétés de cristaux liquides favorisent un alignement plan, à orientation au hasard ou aléatoire, aux surfaces majeures de ladite cellule.
